# EUROPÄISCHE PATENTSCHRIFT

(11) **EP 2 985 883 B1**
(45) Veröffentlichungstag und Bekanntmachung des Hinweises auf die Patenterteilung: **10.10.2018**
(21) Anmeldenummer: 15174455.4
(22) Anmeldetag: 30.06.2015
(51) Int. Cl.: H02K 1/14, F04C 25/02, F04C 29/00, H02K 7/14, H02K 15/04, F04C 18/12, F04C 18/16, F04C 18/344

(54) **VAKUUMPUMPE**
VACUUM PUMP
POMPE À VIDE

(30) Priorität: 17.07.2014 DE 102014110073
(43) Veröffentlichungstag der Anmeldung: 17.02.2016
(73) Patentinhaber: PFEIFFER VACUUM GMBH, 35614 Asslar (DE)
(72) Erfinder: Losch, Wolfgang, 35080 Bad Endbach (DE); Wagner, Jürgen, 57629 Müschenbach (DE)
(74) Vertreter: Manitz Finsterwald Patentanwälte PartmbB

(56) Entgegenhaltungen:
- EP-A1- 1 742 327
- EP-A1- 2 086 089
- EP-A2- 0 629 034
- EP-A2- 1 265 338
- WO-A2-2012/082680
- DE-A1-102008 036 025
- DE-A1-102011 078 513
- JP-A- H11 341 716
- JP-A- 2003 079 111
- US-A1- 2001 030 486
- US-A1- 2004 189 136
- US-A1- 2004 189 137
- US-A1- 2004 217 669
- US-A1- 2007 182 271
- US-A1- 2010 007 236
- US-A1- 2011 169 367
- US-A1- 2013 038 169

## Beschreibung

Die vorliegende Erfindung betrifft eine Vakuumpumpe, insbesondere Drehschieber-, Hubkolben-, Wälzkolben- oder Schraubenpumpe, umfassend einen um eine Rotationsachse drehbaren Pump-Rotor zum Pumpen eines Fluids durch die Vakuumpumpe und einen Elektromotor zum Antreiben des Pump-Rotors, wobei der Elektromotor einen drehbaren Rotor und einen mit dem Rotor zusammenwirkenden, von der Grundform her ringförmigen Stator aufweist. Die vorliegende Erfindung betrifft ferner ein Verfahren zur Herstellung eines Elektromotors für eine Vakuumpumpe, wobei der Elektromotor einen drehbaren Rotor und einen mit dem Rotor zusammenwirkenden, von der Grundform her ringförmigen Stator aufweist.

Die EP 2 072 831 A2 offenbart eine als Turbomolekularpumpe ausgestaltete Vakuumpumpe, bei der der Pump-Rotor mindestens 20.000 Umdrehungen pro Minute ausführt. Der Elektromotor, der zum Antreiben des Pump-Rotors der Turbomolekularpumpe eingesetzt wird, umfasst gemäß Fig. 2 der EP 2 072 831 A2 einen ringförmigen Stator 26 mit sechs Polschuhen 36, die jeweilige Statorzähne bilden und jeweils eine Spule 38 tragen. Dabei sind die Polschuhe 36 einstückig miteinander und mit dem Stator 26 ausgebildet.

Bei Vakuumpumpen, die als Vorpumpen zu Turbomolekularpumpen eingesetzt werden, wie etwa Drehschieber-, Hubkolben-, Wälzkolben- oder Schraubenpumpen, erreicht der Pump-Rotor deutlich kleinere Drehzahlen als der Pump-Rotor einer Turbomolekularpumpe. Allerdings soll ein Elektromotor einer derartigen Vorpumpe ein hohes Drehmoment liefern können, da derartige Vorpumpen oft gegen einen hohen Ausstoßdruck und unter stark wechselnden Lasten arbeiten müssen. Außerdem soll eine derartige Vakuumpumpe bzw. deren Elektromotor auf einfache und kostengünstige Weise herstellbar sein.

Die EP 1 265 338 A2 offenbart eine Vakuumpumpe gemäß dem Oberbegriff des Anspruchs 1 und ein Verfahren gemäß dem Oberbegriff des Anspruchs 10.

Ferner beschreibt die EP 1 742 327 A1 einen segmentierten Stator, wobei jeder Statorzahn einen sich radial erstreckenden Tragabschnitt aufweist, an dem radial außen liegend ein erster sowie ein zweiter bogenförmiger Kontaktabschnitt und radial innen liegend ein erster sowie ein zweiter bogenförmiger Endabschnitt angeordnet sind, wobei von dem Tragabschnitt der erste Kontaktabschnitt sowie der erste Endabschnitt entgegen der Umfangsrichtung und der zweite Kontaktabschnitt sowie der zweite Endabschnitt in Umfangsrichtung abstehen, wobei der erste Kontaktabschnitt, der zweite Kontaktabschnitt, der erste Endabschnitt und der zweite Endabschnitt jeweils eine radiale Abmessung aufweisen, die in Umfangsrichtung konstant ist
Weiterer Stand der Technik ist aus DE 10 2011 078513 A1, US 2001/030486 A1, WO 2012/082680 A2, JP 11341716 und DE 10 2008 036025 A1 bekannt.

Der vorliegenden Erfindung liegt daher die Aufgabe zugrunde, eine Vakuumpumpe bereitzustellen, deren Elektromotor zum Antreiben des Pump-Rotors einfach und kostengünstig herstellbar ist und der geeignet ist, im Betrieb ein verhältnismäßig hohes Drehmoment zu liefern.

Der vorliegenden Erfindung liegt ferner die Aufgabe zugrunde, ein einfaches und kostengünstig durchführbares Verfahren zur Herstellung eines Elektromotors für eine Vakuumpumpe bereitzustellen.

Die Aufgabe wird durch eine Vakuumpumpe mit den Merkmalen des Anspruchs 1 bzw. durch ein Verfahren mit den Merkmalen des Anspruchs 10 gelöst. Bevorzugte Ausführungsformen und Weiterbildungen der Erfindung sind in den abhängigen Ansprüchen angegeben.

Erfindungsgemäß wird eine Vakuumpumpe der eingangs genannten Art dadurch weitergebildet, dass der Stator aus mehreren in Umfangsrichtung des Stators aufeinanderfolgenden, von der Grundform her ringsegmentartig ausgebildeten Statorzähnen zusammengesetzt ist. Bei der erfindungsgemäßen Vakuumpumpe sind die Statorzähne somit nicht einstückig miteinander ausgebildet, sondern der Stator ist aus den einzelnen Statorzähnen zusammengesetzt. Dadurch wird die Herstellung des Stators vereinfacht, da dieser nicht aus einem Stück gefertigt werden muss. Vielmehr können die Statorzähne einzeln gefertigt und dann zusammengesetzt werden, um den Stator zu bilden.

Bei der erfindungsgemäßen Vakuumpumpe weist jeder Statorzahn einen ersten Kontaktabschnitt und einen zweiten Kontaktabschnitt auf, wobei im Stator der erste Kontaktabschnitt eines jeweiligen Statorzahns den zweiten Kontaktabschnitt eines in Umfangsrichtung des Stators vorhergehenden Statorzahns kontaktiert, und wobei der zweite Kontaktabschnitt des jeweiligen Statorzahns den ersten Kontaktabschnitt eines in Umfangsrichtung nachfolgenden Statorzahns kontaktiert. Bei den zum Stator zusammengesetzten Statorzähnen ist somit ein zweiter Kontaktabschnitt eines Statorzahns in Kontakt mit dem jeweiligen ersten Kontaktabschnitt eines in Umfangsrichtung des Stators nachfolgenden Statorzahns. Die Kontaktabschnitte der in Umfangsrichtung des Stators aufeinanderfolgenden Statorzähne berühren sich somit, so dass Luftspalte im Bereich zwischen den Statorzähnen vermieden werden können. Die Kontaktabschnitte der Statorzähne bilden daher - in Umfangsrichtung des Stators gesehen - ein geschlossenes Joch, wodurch die Leistungsfähigkeit des Elektromotors verbessert wird.

Ferner weisen zur Bildung einer formschlüssigen Verbindung zwischen den ersten und zweiten Kontaktabschnitten zweier in Umfangsrichtung des Stators aufeinanderfolgender Statorzähne der erste Kontaktabschnitt einen Fortsatz und der zweite Kontaktabschnitt eine zu dem Fortsatz komplementäre Ausnehmung auf. Der an einem ersten Kontaktabschnitt eines Statorzahns vorgesehene Fortsatz kann in die komplementäre Ausnehmung des zweiten Kontaktabschnitts eines in Umfangsrichtung des Stators vorhergehenden Statorzahns eingreifen, so dass eine formschlüssige Verbindung zwischen zwei in Umfangsrichtung des Stators aufeinanderfolgenden Statorzähnen ausgebildet wird.

Vorzugsweise trägt jeder Statorzahn wenigstens eine Spule, die vor dem Zusammensetzen der Statorzähne um den jeweiligen Statorzahn gewickelt wurde. Die elektrischen Spulen zur Magnetfelderzeugung werden somit um die Statorzähne einzeln gewickelt, bevor die Statorzähne zusammengesetzt werden. Bevorzugt wurde dabei jede Spule für sich genommen um den jeweiligen Statorzahn gewickelt, also unabhängig von den Spulen um die anderen Statorzähne. Da das Wickeln der jeweiligen Spule um den jeweiligen Statorzahn vor dem Zusammensetzen der Statorzähne erfolgt, können die Statorzähne besonders einfach gehandhabt werden. Der Wickelvorgang kann somit auf einfache Weise durchgeführt werden.

Bevorzugt sind die von den Statorzähnen getragenen Spulen miteinander elektrisch verschaltet. Die von verschiedenen Statorzähnen getragenen Spulen wurden somit miteinander elektrisch verbunden, insbesondere nach dem Zusammensetzen der Statorzähne.

Nach einer bevorzugten Ausgestaltung der Erfindung weist jeder Statorzahn an denjenigen Seiten, die in Umfangsrichtung des Stators gesehen einem vorhergehenden bzw. einem nachfolgenden Statorzahn zugewandt sind, jeweils eine Aussparung auf, wobei eine um den jeweiligen Statorzahn gewickelte Spule in den Aussparungen des Statorzahns aufgenommen ist. Durch die Aussparungen kann die jeweilige Spule sicher am jeweiligen Statorzahn gehalten werden. Außerdem wird durch die Aussparungen im Bereich des Stators ein verhältnismäßig großer Freiraum bereitgestellt, den die Spulen einnehmen können. Um jeden Statorzahn kann somit gewissermaßen verhältnismäßig viel Spulenmaterial gewickelt werden. Dadurch kann ein verhältnismäßig hohes Magnetfeld durch die Statorspulen generiert werden, so dass der Elektromotor mit dem Stator ein hohes Drehmoment bereitstellen kann.

Die jeweilige Spule kann derart um den jeweiligen Statorzahn gewickelt sein, dass die Aussparungen zumindest annähernd vollständig von der Spule ausgefüllt sind. Das Spulenmaterial kann somit wenigstens annähernd die Aussparungen des jeweiligen Statorzahns vollständig ausfüllen.

Besonders vorteilhaft ist es, wenn das in den Wicklungen der Spule enthaltene elektrisch leitende Material, insbesondere Kupfer, einen hohen Füllfaktor in den Aussparungen erreicht, insbesondere einen Füllfaktor von mehr als 30 Prozent, bevorzugt mehr als 35 Prozent, weiter bevorzugt mehr als 40 Prozent, noch weiter bevorzugt mehr als 45 Prozent, noch weiter bevorzugt mehr als 50 Prozent und noch weiter bevorzugt mehr als 55 Prozent. Durch den hohen Füllfaktor können ohmsche Verluste und eine Erwärmung des Elektromotors gering gehalten werden. Der Füllfaktor bezieht sich dabei auf das in Prozent angegebene Verhältnis zwischen den aufsummierten Querschnitten des elektrisch leitenden Materials und dem in einer jeweiligen Aussparung für die Wicklungen zur Verfügung stehenden Querschnitt.

Vorzugsweise bilden im Stator die ersten und zweiten Kontaktabschnitte zweier in Umfangsrichtung des Stators aufeinanderfolgender Statorzähne untereinander eine formschlüssige Verbindung aus. In Umfangsrichtung des Stators gesehen aufeinanderfolgende Statorzähne können somit über die Kontaktabschnitte formschlüssig miteinander verbunden werden. Dadurch kann der Vorgang des Zusammenfügens der Statorzähne vereinfacht werden, da der aus den zusammengesetzten Statorzähnen gebildete Stator aufgrund der formschlüssigen Verbindung zwischen den aufeinanderfolgenden Statorelementen eine gewisse Stabilität aufweist, die zum Beispiel auch die Anordnung der Statorzähne in einem Gehäuse vereinfacht.

Bevorzugt liegen die beiden Kontaktabschnitte bei jedem Statorzahn bezogen auf die radiale Richtung des Stators radial außen. Die Kontaktabschnitte können somit ein radial außen liegendes Joch des Stator bilden.

Nach einer bevorzugten Weiterbildung der Erfindung sind die Statorzähne in einem Gehäuse fixiert. Bei dem Gehäuse kann es sich um ein Gehäuse des Stators handeln, das am Gehäuse des Elektromotors befestigt wird. Bei dem Gehäuse kann es sich allerdings auch um das Gehäuse des Elektromotors handeln, so dass auf ein separates Statorgehäuse verzichtet werden kann.

Die Statorzähne können insbesondere dadurch im Gehäuse fixiert werden, dass zwischen den Statorzähnen und dem Gehäuse eine Querpressverbindung, insbesondere eine Dehnpressverbindung oder eine Schrumpfpressverbindung, ausgebildet ist. Das Gehäuse kann erwärmt werden, während die Statorzähne innerhalb des Gehäuses zum Stator zusammengesetzt werden. Während des Abkühlens schrumpft das Gehäuse auf den Stator auf, wodurch eine Schrumpfpressverbindung zwischen dem Gehäuse und dem Stator ausgebildet wird. Die Statorzähne werden somit dauerhaft im Gehäuse fixiert.

Die Statorzähne können mit einem Guss übergossen sein, insbesondere derart, dass nur die Innenflächen der Statorzähne sichtbar sind.

Die Spulen können auf den Statorzähnen vergossen sein.

Erfindungsgemäße Vakuumpumpen können Drehschieber-, Hubkolben-, Schrauben- oder Wälzkolbenpumpen sein, die häufig als Vorpumpen zu Turbomolekularpumpen eingesetzt werden. Erfindungsgemäße Vakuumpumpen bieten dabei den Vorteil, dass deren Elektromotoren in der Lage sind, hohe Drehmomente zu liefern, wodurch hohe Ausstoßdrücke und wechselnde Lasten problemlos gemeistert werden können. Bevorzugt liegt dabei die Drehzahl des Pump-Rotors und entsprechend die Drehzahl des Rotors des Elektromotors bei weniger als 333 Hz, bevorzugt bei maximal 125 Hz.

Bei dem Fluid handelt es sich insbesondere um ein Gas, wie etwa Luft.

Die Erfindung betrifft auch ein Verfahren zur Herstellung eines Elektromotors für eine Vakuumpumpe, wobei der Elektromotor einen drehbaren Rotor und einen mit dem Rotor zusammenwirkenden, von der Grundform her ringförmigen Stator aufweist, und wobei der Stator aus mehreren in Umfangsrichtung des Stators aufeinanderfolgenden, von der Grundform her ringsegmentartig ausgebildeten Statorzähnen zusammengesetzt wird.

Vorteilhaft ist es, wenn um jeden Statorzahn eine jeweilige Spule gewickelt wird bevor die Statorzähne zum Stator zusammengesetzt werden.

Vorzugsweise werden von den Statorzähnen getragene Spulen nach dem Zusammensetzen der Statorzähne zu dem Stator miteinander elektrisch verschaltet.

Bevorzugt wird die jeweilige Spule derart um den jeweiligen Statorzahn gewickelt, dass im Statorzahn vorgesehene Aussparungen zumindest annähernd vollständig von der Spule ausgefüllt werden, und/oder dass das in den Wicklungen der Spule enthaltene, elektrisch leitende Material, insbesondere Kupfer, einen hohen Füllfaktor in den Aussparungen erreicht, insbesondere einen Füllfaktor von mehr als 30 Prozent, bevorzugt mehr als 35 Prozent, weiter bevorzugt mehr als 40 Prozent, noch weiter bevorzugt mehr als 45 Prozent, noch weiter bevorzugt mehr als 50 Prozent und noch weiter bevorzugt mehr als 55 Prozent.

Von Vorteil ist auch, wenn die Statorzähne in einem Gehäuse fixiert werden. Bevorzugt wird dabei zwischen den Statorzähnen und dem Gehäuse eine Querpressverbindung, insbesondere eine Dehnpressverbindung oder eine Schrumpfpressverbindung, ausgebildet.

Nachfolgend wird die Erfindung beispielhaft anhand einer vorteilhaften Ausführungsform und unter Bezugnahme auf die beigefügten Figuren beschrieben. Es zeigen,
- Fig. 1: eine Querschnittsansicht eines Stators eines Elektromotors einer erfindungsgemäßen Vakuumpumpe,
- Fig. 2: eine perspektivische Ansicht des Stators von Fig. 1,
- Fig. 3: eine Querschnittsansicht eines Statorzahns des Stators von Fig. 1,
- Fig. 4: eine perspektivische Ansicht eines Gehäuses eines Elektromotors einer erfindungsgemäßen Vakuumpumpe, und
- Fig. 5: eine schematische Querschnittsansicht einer Drehschiebervakuumpumpe.

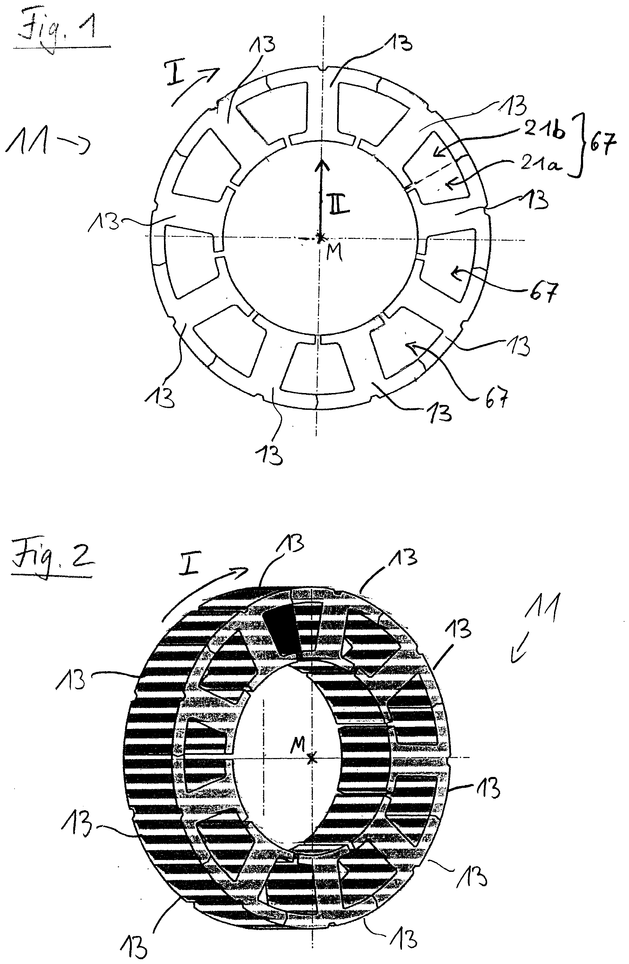

Der in den Fig. 1 und 2 gezeigte Stator 11 ist aus mehreren in Umfangsrichtung I des Stators 11 aufeinanderfolgenden Statorzähnen 13 zusammengesetzt, die von ihrer Grundform her ringsegmentartig ausgebildet sind, so dass der Stator 11, wie in den Fig. 1 und 2 zu sehen ist, eine von der Grundform her ringförmige Struktur aufweist.

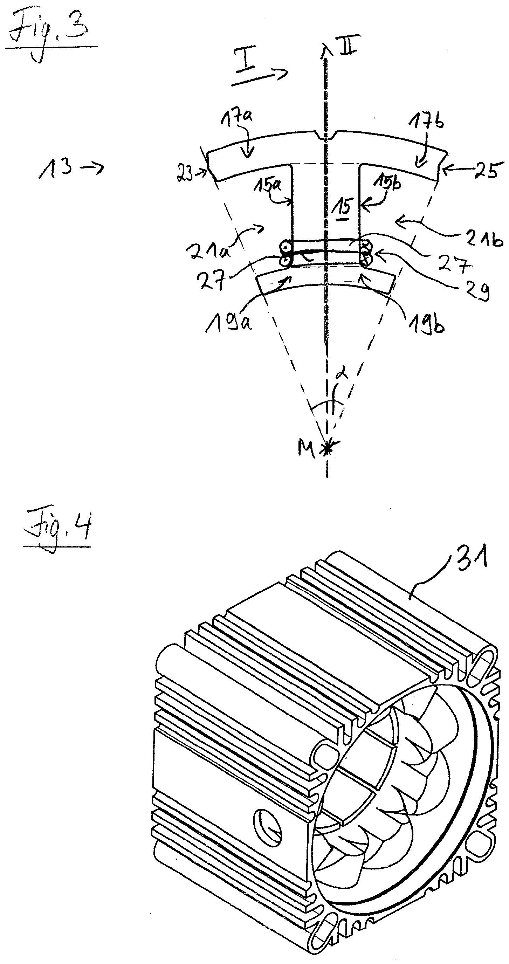

Wie die Fig. 3 zeigt, ist jeder Statorzahn 13 in Art einer Doppel-T-Struktur ausgebildet. Bezogen auf eine - von der Mittelachse M des Stators 11 aus gesehen - radiale Richtung II weist jeder Statorzahn 13 einen vom Querschnitt her zumindest annähernd rechteckigen Tragabschnitt 15 auf. Um den Tragabschnitt 15 werden Windungen 27 einer Spule 29 herum gewickelt, wie in Fig. 3 angedeutet ist. Dabei weist jede Windung 27 bevorzugt einen im Wesentlichen quer zur radialen Richtung II verlaufenden Windungsquerschnitt auf. Der Tragabschnitt 15 weist eine erste Seite 15a und eine zweite Seite 15b auf. Die erste Seite 15a weist entgegen der Umfangsrichtung I, wohingegen die zweite Seite 15b in Umfangsrichtung weist, wie Fig. 3 zeigt.

Am Tragabschnitt 15 sind ein erster Kontaktabschnitt 17a und ein zweiter Kontaktabschnitt 17b angeordnet, die in radialer Richtung II gesehen radial außen liegen. Dabei sind die beiden Kontaktabschnitte 17a und 17b entsprechend dem Außenradius des aus den Statorzähnen 13 zusammengesetzten Stators 11 gebogen, wobei der erste Kontaktabschnitt 17a entgegen der Umfangsrichtung I über die erste Seite 15a des Tragabschnitts 15 hinausragt. Der zweite Kontaktabschnitt 17b ragt in Umfangsrichtung I über die zweite Seite 15b des Tragabschnitts 15 hinaus, wie in Fig. 3 zu sehen ist.

Am Tragabschnitt 15 sind außerdem noch ein erster und ein zweiter Endabschnitt 19a, 19b angeordnet. Dabei ragt der erste Endabschnitt 19a entgegen der Umfangsrichtung I über die erste Seite 15a des Tragabschnitts 15 hinaus. Der zweite Endabschnitt 19b ragt in Umfangsrichtung I gesehen über die zweite Seite 15b des Tragabschnitts 15 hinaus.

Wie der in Fig. 3 von der Mittelachse M aus gestrichelt eingezeichnete Winkel α andeutet, ist der Statorzahn 13 von seiner Grundform her ringsegmentartig ausgebildet. Abweichend von der ringsegmentartigen Form weist jeder Statorzahn 13 allerdings im Bereich der ersten Seite 15a eine erste Aussparung 21a auf, die in radialer Richtung gesehen durch den ersten Kontaktabschnitt 17a sowie den ersten Endabschnitt 19a begrenzt wird. Dementsprechend weist jeder Statorzahn 13 im Bereich seiner zweiten Seite 15b eine zweite Aussparung 21b auf, die in radialer Richtung von dem zweiten Kontaktabschnitt 17b und dem zweiten Endabschnitt 19b begrenzt wird.

Wie die Fig. 3 zeigt, weist der erste Kontaktabschnitt 17a jedes Statorzahns 13 an seinem äußeren Ende einen Fortsatz 23 auf. Der zweite Kontaktabschnitt 17b weist an seinem äußeren Ende eine Ausnehmung 25 auf, die zu dem Fortsatz 23 komplementär ausgebildet ist.

Zur Herstellung des in den Fig. 1 und 2 gezeigten Stators 11 wird dieser aus den Statorzähnen 13 zusammengesetzt. Dabei wird die wenigstens eine Spule 29 vor dem Zusammensetzen um den jeweiligen Statorzahn 13 gewickelt, und zwar bevorzugt derart, dass die Aussparungen 21a, 21b wenigstens annähernd vollständig von der Spule 29 ausgefüllt sind und das elektrisch leitende Material, wie etwa Kupfer, in den Wicklungen 27 einen möglichst hohen Füllfaktor in den Aussparungen 21a, 21b erreicht.

Vorzugsweise wird ein Füllfaktor im Bereich von 30 bis über 55 Prozent realisiert. Durch den hohen Füllfaktor kann der ohmsche Widerstand in den Wicklungen 27 gering gehalten werden, so dass im Betrieb nur geringe ohmsche Verluste in den Wicklungen 27 auftreten, wodurch die Erwärmung gering gehalten und die Leistungsfähigkeit des Elektromotors erhöht werden kann.

Zur Berechnung des Füllfaktors in einer Aussparung 21a, 21b werden die durch eine Ebene verlaufenden Querschnittsflächen des elektrisch leitenden Materials der Wicklungen 27 ins Verhältnis gesetzt zu der in der Ebene der jeweiligen Aussparung 21a, 21b insgesamt zur Verfügung stehenden Querschnittsfläche. Alternativ können zur Ermittlung des Füllfaktors auch die Isolationsschichten der Wicklungen 27 miteinbezogen werden, wodurch höhere Füllfaktoren von bis zu 100 Prozent realisierbar sind.

Die Statorzähne 13 werden so zum Stator 11 zusammengesetzt, dass der Fortsatz 23 am ersten Kontaktabschnitt 17a eines Statorzahns 13 in die Ausnehmung 25 eines zweiten Kontaktabschnitts 17b eines in Umfangsrichtung I gesehen vorgeordneten Statorzahns 13 eingreift. Auf diese Weise werden die Statorzähne 13 formschlüssig miteinander verbunden. Der von den Statorzähnen 13 gebildete ringförmige Stator 11 weist somit eine intrinsische Stabilität auf.

Außerdem liegen bei dem Stator 11 die Kontaktabschnitte 17a, 17b aufeinanderfolgender Statorzähne 13 aneinander an, so dass ein in Umfangsrichtung I gesehen geschlossenes Joch gebildet wird, wie Fig. 1 zeigt.

Die Statorzähne 13 werden innerhalb eines Gehäuses 31 (Fig. 4) zum Stator 11 zusammengesetzt. Alternativ werden die Statorzähne 13 außerhalb des Gehäuses 31 zum Stator 11 zusammengesetzt und der Stator 11 wird dann in das Gehäuse 31 eingebaut.

Bevorzugt weisen der Innendurchmesser des Gehäuses 31 und der Außendurchmesser des Stators 11 relativ zueinander eine Übermaßpassung auf, so dass zwischen dem Stator 11 und dem Gehäuse 31 eine Pressverbindung ausgebildet werden kann. Vorzugsweise wird das Gehäuse 31 erhitzt, um den Stator 11 darin anzuordnen oder während die Statorzähne 13 innerhalb des Gehäuses 31 zum Stator 11 zusammengesetzt werden. Wenn das Gehäuse 31 dann abkühlt, schrumpft es aufgrund der Übermaßpassung auf den Stator 11 auf.

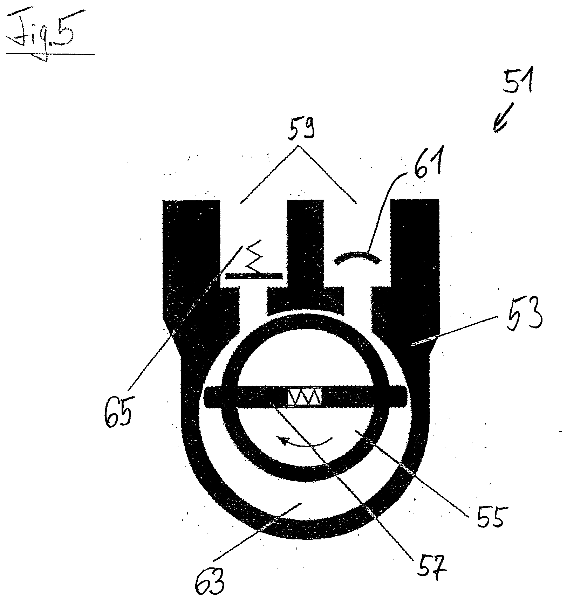

Die in Fig. 5 gezeigte Drehschiebervakuumpumpe 51 ist eine ölüberlagerte Rotationsverdrängerpumpe und weist ein Gehäuse 53, einen exzentrisch eingebauten Pump-Rotor 55, mittels Flieh- und Federkraft radial bewegliche Schieber 57 und einen Ein- und Auslass 59 auf. Ein Einlassventil 61 ist als Vakuumsicherheitsventil ausgebildet und im Betrieb immer geöffnet. Ein Arbeitsraum 63 wird durch das Gehäuse 53, den Pump-Rotor 55 und die Schieber 57 begrenzt. Der Pump-Rotor 55 und die Schieber 57 teilen den Arbeitsraum 63 in zwei separate Räume mit veränderlichem Volumen. Dreht sich der Pump-Rotor 55, so strömt Gas in den sich vergrößernden Schöpfraum, bis dieser durch einen der Schieber 57 abgesperrt wird. Anschließend wird das eingeschlossene Gas soweit komprimiert, bis sich ein Auslassventil 65 gegen den Atmosphärendruck öffnet. Das Auslassventil 65 ist ölüberlagert, so dass beim Öffnen des Auslassventils 65 eine kleine Menge Öl in den Schöpfraum eintritt. Das eingetretene Öl sorgt für eine gute Schmierung und dichtet die Schieber 57 gegen das Gehäuse 53 ab.

Bei der Drehschiebervakuumpumpe 51 kommt ein mit dem Pump-Rotor 55 gekoppelter Elektromotor (nicht gezeigt) zum rotierenden Antreiben der Rotors 55 zum Einsatz. Dabei weist der Elektromotor einen drehbaren Rotor und einen entsprechend dem Stator 11 ausgebildeten Stator auf, die in dem Gehäuse 31 gemäß Fig. 4 untergebracht sein können.

Bei dem Elektromotor kann es sich zum Beispiel um einen PMSM-Motor handeln (PMSM für permanent magnet syncronous motor), also um einen bürstenlosen Elektromotor, bei dem der Rotor mit Permanentmagneten bestückt ist.

Bei dem Stator 11 bilden die Aussparungen 21a, 21b zweier aneinander liegender Statorzähne 13 jeweils eine Nut 67, so dass der Stator insgesamt Q = 9 Nuten aufweist und dadurch P = 6 Magnetpole erreicht werden können. Außerdem kann bei der realisierten Einzelzahnwicklung erreicht werden, dass der Quotient zwischen der Nutzahl Q = 9 und dem Produkt aus der Polzahl P = 6 und der Strangzahl m = 3, die die Anzahl an elektrischen Phasen wiedergibt, eine gebrochene Zahl r ist: r = 1/2.

Ein Elektromotor mit einem entsprechend dem Stator 11 ausgebildeten Stator kann auch in anderen Vakuumpumpen, wie etwa in einer Hubkolben- oder Wälzkolbenpumpe, zum Antreiben eines Pump-Rotors eingesetzt werden. Die Anwendung eines derartigen Elektromotors ist somit nicht auf eine Drehschieberpumpe, wie in Fig. 5 gezeigt, begrenzt.

### Bezugszeichenliste

- 11: Stator
- 13: Statorzahn
- 15: Tragabschnitt
- 15a: erste Seite
- 15b: zweite Seite
- 17a: erster Kontaktabschnitt
- 17b: zweiter Kontaktabschnitt
- 19a: erster Endabschnitt
- 19b: zweiter Endabschnitt
- 21a: erste Aussparung
- 21b: zweite Aussparung
- 23: Fortsatz
- 25: Ausnehmung
- 27: Windungen
- 29: Spule
- 31: Gehäuse
- 51: Drehschiebervakuumpumpe
- 53: Gehäuse
- 55: Pump-Rotor
- 57: Schieber
- 59: Ein- und Auslass
- 61: Einlassventil
- 63: Arbeitsraum
- 65: Auslassventil
- 67: Nut

- I: Umfangsrichtung
- II: radiale Richtung
- M: Mittelachse des Stators
- α: Winkel

## Patentansprüche

1. Vakuumpumpe, insbesondere Drehschieber-, Hubkolben-, Wälzkolben- oder Schraubenpumpe, umfassend einen um eine Rotationsachse drehbaren Pump-Rotor (55) zum Pumpen eines Fluids durch die Vakuumpumpe (51) und einen Elektromotor zum Antreiben des Pump-Rotors (55),
wobei der Elektromotor einen drehbaren Rotor und einen mit dem Rotor zusammenwirkenden, von der Grundform her ringförmigen Stator (11) aufweist,
**dadurch gekennzeichnet, dass**
der Stator (11) aus mehreren in Umfangsrichtung (I) des Stators (11) aufeinanderfolgenden, von der Grundform her ringsegmentartig ausgebildeten Statorzähnen (13) zusammengesetzt ist,
wobei jeder Statorzahn (13) einen sich radial erstreckenden Tragabschnitt (15) aufweist, an dem radial außen liegend ein erster sowie ein zweiter bogenförmiger Kontaktabschnitt (17a, 17b) und radial innen liegend ein erster sowie ein zweiter bogenförmiger Endabschnitt (19a, 19b) angeordnet sind, wobei von dem Tragabschnitt (15) der erste Kontaktabschnitt (17a) sowie der erste Endabschnitt (19a) entgegen der Umfangsrichtung und der zweite Kontaktabschnitt (17b) sowie der zweite Endabschnitt (19b) in Umfangsrichtung abstehen, wobei der erste Kontaktabschnitt (17a), der zweite Kontaktabschnitt (17b), der erste Endabschnitt (19a) und der zweite Endabschnitt (19b) jeweils eine radiale Abmessung aufweisen, die in Umfangsrichtung konstant ist;
wobei im Stator (11) der erste Kontaktabschnitt (17a) eines jeweiligen Statorzahns (13) den zweiten Kontaktabschnitt (17b) eines in Umfangsrichtung (I) des Stators (11) vorhergehenden Statorzahns (13) kontaktiert, und dass der zweite Kontaktabschnitt (17b) des jeweiligen Statorzahns (13) den ersten Kontaktabschnitt (17a) eines in Umfangsrichtung (I) nachfolgenden Statorzahns (13) kontaktiert; wobei zur Bildung einer formschlüssigen Verbindung zwischen den ersten und zweiten Kontaktabschnitten (17a, 17b) zweier in Umfangsrichtung (I) des Stators (11) aufeinanderfolgender Statorzähne (13) der erste Kontaktabschnitt (17a) eines Statorzahns (13) einen Fortsatz (23) und der zweite Kontaktabschnitt (17b) desselben Statorzahns (13) eine zu dem Fortsatz (23) komplementäre Ausnehmung (25) aufweist; und
wobei der Fortsatz (23) sich in radialer Richtung über die gesamte radiale Abmessung des ersten Kontaktabschnitts (17a) erstreckt und ein freies Ende aufweist, in Richtung dessen sich der Fortsatz (23) keilförmig verjüngt.

2. Vakuumpumpe nach Anspruch 1,
**dadurch gekennzeichnet, dass**
jeder Statorzahn (13) wenigstens eine Spule (29) trägt, die vor dem Zusammensetzen der Statorzähne (13) um den jeweiligen Statorzahn (13) gewickelt wurde.

3. Vakuumpumpe nach Anspruch 1 oder 2,
**dadurch gekennzeichnet, dass**
von den Statorzähnen (13) getragene Spulen (29) elektrisch miteinander verschaltet sind.

4. Vakuumpumpe nach einem der vorhergehenden Ansprüche,
**dadurch gekennzeichnet, dass**
jeder Statorzahn (13) an denjenigen Seiten (15a, 15b), die in Umfangsrichtung (I) des Stators (11) gesehen einem vorhergehenden bzw.
einem nachfolgenden Statorzahn (13) zugewandt sind, jeweils eine Aussparung (21a, 21b) aufweist, und eine um einen Statorzahn (13) gewickelte Spule (29) in den Aussparungen (21a, 21b) des Statorzahns (13) aufgenommen ist.

5. Vakuumpumpe nach Anspruch 4,
**dadurch gekennzeichnet, dass**
die Spule (29) derart um den Statorzahn (13) gewickelt ist, dass die Aussparungen (21a, 21b) zumindest annähernd vollständig von der Spule (29) ausgefüllt sind.

6. Vakuumpumpe nach Anspruch 4 oder 5,
**dadurch gekennzeichnet, dass**
das in den Wicklungen (27) der Spule (29) enthaltene elektrisch leitende Material, insbesondere Kupfer, einen hohen Füllfaktor in den Aussparungen (21a, 21b) erreicht, insbesondere einen Füllfaktor von mehr als 30 Prozent, bevorzugt mehr als 35 Prozent, weiter bevorzugt mehr als 40 Prozent, noch weiter bevorzugt mehr als 45 Prozent, noch weiter bevorzugt mehr als 50 Prozent und noch weiter bevorzugt mehr als 55 Prozent.

7. Vakuumpumpe nach Anspruch 1,
**dadurch gekennzeichnet, dass**
im Stator (11) die ersten und zweiten Kontaktabschnitte (17a, 17b) zweier in Umfangsrichtung des Stators (11) aufeinander folgender Statorzähne (13) untereinander eine formschlüssige Verbindung ausbilden.

8. Vakuumpumpe nach einem der Ansprüche 1 oder 7,
**dadurch gekennzeichnet, dass**
die beiden Kontaktabschnitte (27a, 17b) bei jedem Statorzahn (13) bezogen auf eine radiale Richtung (II) des Stators (11) radial außen liegen.

9. Vakuumpumpe nach einem der vorhergehenden Ansprüche,
**dadurch gekennzeichnet, dass**
die Statorzähne (13) in einem Gehäuse (31) fixiert sind, insbesondere indem zwischen den Statorzähnen (13) und dem Gehäuse (31) eine Querpressverbindung, insbesondere eine Dehnpressverbindung oder eine Schrumpfpressverbindung, ausgebildet ist.

10. Verfahren zur Herstellung eines Elektromotors für eine Vakuumpumpe (51), insbesondere eine Vakuumpumpe nach einem der vorhergehenden Ansprüche,
wobei der Elektromotor einen drehbaren Rotor und einen mit dem Rotor zusammenwirkenden, von der Grundform her ringförmigen Stator (11) aufweist,
**dadurch gekennzeichnet, dass**
der Stator (11) aus mehreren in Umfangsrichtung (I) des Stators (11) aufeinanderfolgenden, von der Grundform her ringsegmentartig ausgebildeten Statorzähnen (13) zusammengesetzt wird;
wobei jeder Statorzahn (13) einen sich radial erstreckenden Tragabschnitt (15) aufweist, an dem radial außen liegend ein erster sowie ein zweiter bogenförmiger Kontaktabschnitt (17a, 17b) und radial innen liegend ein erster sowie ein zweiter bogenförmiger Endabschnitt (19a, 19b) angeordnet sind, wobei von dem Tragabschnitt (15) der erste Kontaktabschnitt (17a) sowie der erste Endabschnitt (19a) entgegen der Umfangsrichtung und der zweite Kontaktabschnitt (17b) sowie der zweite Endabschnitt (19b) in Umfangsrichtung abstehen, wobei der erste Kontaktabschnitt (17a), der zweite Kontaktabschnitt (17b), der erste Endabschnitt (19a) und der zweite Endabschnitt (19b) jeweils eine radiale Abmessung aufweisen, die in Umfangsrichtung konstant ist;
wobei im Stator (11) der erste Kontaktabschnitt (17a) eines jeweiligen Statorzahns (13) den zweiten Kontaktabschnitt (17b) eines in Umfangsrichtung (I) des Stators (11) vorhergehenden Statorzahns (13) kontaktiert, und dass der zweite Kontaktabschnitt (17b) des jeweiligen Statorzahns (13) den ersten Kontaktabschnitt (17a) eines in Umfangsrichtung (I) nachfolgenden Statorzahns (13) kontaktiert; wobei zur Bildung einer formschlüssigen Verbindung zwischen den ersten und zweiten Kontaktabschnitten (17a, 17b) zweier in Umfangsrichtung (I) des Stators (11) aufeinanderfolgender Statorzähne (13) der erste Kontaktabschnitt (17a) eines Statorzahns (13) einen Fortsatz (23) und der zweite Kontaktabschnitt (17b) desselben Statorzahns (13) eine zu dem Fortsatz (23) komplementäre Ausnehmung (25) aufweist; und
wobei der Fortsatz (23) sich in radialer Richtung über die gesamte radiale Abmessung des ersten Kontaktabschnitts (17a) erstreckt und ein freies Ende aufweist, in Richtung dessen sich der Fortsatz (23) keilförmig verjüngt.

11. Verfahren nach Anspruch 10,
**dadurch gekennzeichnet, dass**
vor dem Zusammensetzen der Statorzähne (13) zu dem Stator (11) um jeden Statorzahn (13) wenigstens eine Spule (29) gewickelt wird, und/oder dass von den Statorzähnen (13) getragene Spulen (29), insbesondere nach dem Zusammensetzen der Statorzähne (13) zu dem Stator (11), miteinander verschaltet werden.

12. Verfahren nach Anspruch 11,
**dadurch gekennzeichnet, dass**
die jeweilige Spule (29) derart um den jeweiligen Statorzahn (13) gewickelt wird, dass im Statorzahn (13) vorgesehene Aussparungen (21a, 21b) zumindest annähernd vollständig von der Spule (29) ausgefüllt werden, und/oder
dass das in den Wicklungen (27) der Spule (29) enthaltene, elektrisch leitende Material, insbesondere Kupfer, einen hohen Füllfaktor in den Aussparungen (21a, 21b) erreicht, insbesondere einen Füllfaktor von mehr als 30 Prozent, bevorzugt mehr als 35 Prozent, weiter bevorzugt mehr als 40 Prozent, noch weiter bevorzugt mehr als 45 Prozent, noch weiter bevorzugt mehr als 50 Prozent und noch weiter bevorzugt mehr als 55 Prozent.

13. Verfahren nach einem der Ansprüche 10 bis 12,
**dadurch gekennzeichnet, dass**
die Statorzähne (13) in einem Gehäuse (31) fixiert werden, insbesondere indem zwischen den Statorzähnen (13) und dem Gehäuse (31) eine Querpressverbindung, insbesondere eine Dehnpressverbindung oder eine Schrumpfpressverbindung, ausgebildet wird.

## Claims

1. A vacuum pump, in particular a rotary vane pump, a reciprocating piston pump, a Roots pump or a screw pump, comprising a pump rotor (55) rotatable about an axis of rotation for pumping a fluid through the vacuum pump (51) and an electric motor for driving the pump rotor (55),
wherein the electric motor has a rotatable rotor and a stator (11) which cooperates with the rotor and which is annular in its basic shape, **characterized in that**
the stator (11) is assembled from a plurality of stator teeth (13) which follow one another in the peripheral direction (I) of the stator (11) and which are ring segment-shaped in their basic shape,
with each stator tooth (13) having a radially extending support section (15) at which a first and second arcuate contact section (17a, 17b) are arranged in a radially outwardly disposed manner and a first and second arcuate end section (19a, 19b) are arranged in a radially inwardly disposed manner, with the first contact section (17a) and the first end section (19a) projecting from the support section (15) against the peripheral direction and the second contact section (17b) and the second end section (19b) projecting in the peripheral direction, with the first contact section (17a), the second contact section (17b), the first end section (19a) and the second end section (19b) each having a radial dimension which is constant in the peripheral direction; with, in the stator (11), the first contact section (17a) of a respective stator tooth (13) contacting the second contact section (17b) of a stator tooth (13) which is a preceding stator tooth in the peripheral direction (I) of the stator (11), and with the second contact section (17b) of the respective stator tooth (13) contacting the first contact section (17a) of a stator tooth (13) which is a following stator tooth in the peripheral direction (I);
with the first contact section (17a) of a stator tooth (13) having a prolongation (23) and the second contact section (17b) of the same stator tooth (13) having a recess (25) complementary to the prolongation (23) to form a form-fitted connection between the first and second contact sections (17a, 17b) of two stator teeth (13) following one another in the peripheral direction (I) of the stator (11); and
with the prolongation (23) extending over the total radial dimension of the first contact section (17a) in the radial direction and having a free end in whose direction the prolongation (23) tapers in a wedge shape.

2. A vacuum pump in accordance with claim 1,
**characterized in that**
each stator tooth (13) supports at least one coil (29) which was wound around the respective stator tooth (13) before the assembly of the stator teeth (13).

3. A vacuum pump in accordance with claim 1 or claim 2,
**characterized in that**
coils (29) supported by the stator teeth (13) are electrically connected to one another.

4. A vacuum pump in accordance with any one of the preceding claims,
**characterized in that**
each stator tooth (13) has a respective cut-out (21a, 21b) at those sides (15a, 15b) which face a preceding or a following stator tooth (13) viewed in the peripheral direction (I) of the stator (11); and **in that** a coil (29) wound around a stator tooth (13) is received in the cut-outs (21a, 21b) of the stator tooth (13).

5. A vacuum pump in accordance with claim 4,
**characterized in that**
the coil (29) is wound around the stator tooth (13) such that the cut-outs (21a, 21b) are at least approximately completely filled by the coil (29).

6. A vacuum pump in accordance with claim 4 or claim 5,
**characterized in that**
electrically conductive material included in the windings (27) of the coil (29), in particular copper, achieves a high filling factor in the cut-outs (21a, 21b), in particular a filling factor of more than 30 percent, preferably of more than 35 percent, further preferably of more than 40 percent, even further preferably of more than 45 percent, even further preferably of more than 50 percent and even further preferably of more than 55 percent.

7. A vacuum pump in accordance with claim 1,
**characterized in that**
the first and second contact sections (17a, 17b) of two stator teeth (13) following one another in the peripheral direction of the stator (11) form a form-fitted connection with one another in the stator (11).

8. A vacuum pump in accordance with one of the claims 1 or 7,
**characterized in that**
the two contact sections (27a, 17b) are radially outwardly disposed at each stator tooth (13) with respect to a radial direction (II) of the stator (11).

9. A vacuum pump in accordance with any one of the preceding claims,
**characterized in that**
the stator teeth (13) are fixed in a housing (31), in particular **in that** a transverse press connection, in particular an expanding press connection or a shrinking press connection, is formed between the stator teeth (13) and the housing (31).

10. A method of manufacturing an electric motor for a vacuum pump (51), in particular for a vacuum pump in accordance with any one of the preceding claims,
wherein the electric motor has a rotatable rotor and a stator (11) which cooperates with the rotor and which is annular in its basic shape, **characterized in that**
the stator (11) is assembled from a plurality of stator teeth (13) which follow one another in the peripheral direction (I) of the stator (11) and which are ring segment-shaped in their basic shape,
with each stator tooth (13) having a radially extending support section (15) at which a first and second arcuate contact section (17a, 17b) are arranged in a radially outwardly disposed manner and a first and second arcuate end section (19a, 19b) are arranged in a radially inwardly disposed manner, with the first contact section (17a) and the first end section (19a) projecting from the support section (15) against the peripheral direction and the second contact section (17b) and the second end section (19b) projecting in the peripheral direction, with the first contact section (17a), the second contact section (17b), the first end section (19a) and the second end section (19b) each having a radial dimension which is constant in the peripheral direction; with, in the stator (11), the first contact section (17a) of a respective stator tooth (13) contacting the second contact section (17b) of a stator tooth (13) which is a preceding stator tooth in the peripheral direction (I) of the stator (11), and with the second contact section (17b) of the respective stator tooth (13) contacting the first contact section (17a) of a stator tooth (13) which is a following stator tooth in the peripheral direction (I);
with the first contact section (17a) of a stator tooth (13) having a prolongation (23) and the second contact section (17b) of the same stator tooth (13) having a recess (25) complementary to the prolongation (23) to form a form-fitted connection between the first and second contact sections (17a, 17b) of two stator teeth (13) following one another in the peripheral direction (I) of the stator (11); and
with the prolongation (23) extending over the total radial dimension of the first contact section (17a) in the radial direction and having a free end in whose direction the prolongation (23) tapers in a wedge shape.

11. A method in accordance with claim 10,
**characterized in that**
at least one coil (29) is wound around each stator tooth (13) before the assembly of the stator teeth (13) to form the stator (11); and/or
**in that** coils (29) supported by the stator teeth (13) are connected to one another, in particular after the assembly of the stator teeth (13) to form the stator (11).

12. A method in accordance with claim 11,
**characterized in that**
the respective coil (29) is wound around the respective stator tooth (13) such that cut-outs (21a, 21b) provided in the stator tooth (13) are at least approximately completely filled by the coil (29); and/or
**in that** the electrically conductive material included in the windings (27) of the coil (29), in particular copper, achieves a high filling factor in the cut-outs (21a, 21b), in particular a filling factor of more than 30 percent, preferably of more than 35 percent, further preferably of more than 40 percent, even further preferably of more than 45 percent, even further preferably of more than 50 percent and even further preferably of more than 55 percent.

13. A method in accordance with any one of the claims 10 to 12,
**characterized in that**
the stator teeth (13) are fixed in a housing (31), in particular **in that** a transverse press connection, in particular an expanding press connection or a shrinking press connection, is formed between the stator teeth (13) and the housing (31).

## Revendications

1. Pompe à vide, en particulier pompe à palettes, pompe à piston alternatif, pompe de Roots ou pompe à vis, comportant un rotor de pompe (55) mobile en rotation autour d'un axe de rotation pour pomper un fluide à travers la pompe à vide (51), et un moteur électrique pour entraîner le rotor de pompe (55),
le moteur électrique comprenant un rotor rotatif et un stator (11) de forme générale annulaire coopérant avec le rotor,
**caractérisée en ce que**
le stator (11) est composé de plusieurs dents de stator (13) successives en direction périphérique (I) du stator (11) et réalisées avec une forme générale de segment d'anneau,
dans lequel
chaque dent de stator (13) comprend une portion porteuse (15) qui s'étend radialement et sur laquelle sont agencées une première et une seconde portion de contact (17a, 17b) en forme d'arc, situées radialement à l'extérieur, et une première et une seconde portion d'extrémité (19a, 19b) en forme d'arc, situées radialement à l'intérieur,
la première portion de contact et la première portion d'extrémité (19a) font saillie depuis la portion porteuse (15) en sens opposé à la direction périphérique, et la seconde portion de contact (17b) et la seconde portion d'extrémité (19b) font saillie depuis ladite portion porteuse en direction périphérique,
la première portion de contact (17a), la seconde portion de contact (17b), la première portion d'extrémité (19a) et la seconde portion d'extrémité (19b) présentent chacune une dimension radiale qui est constante en direction périphérique ;
dans le stator (11), la première portion de contact (17a) de la dent de stator respective (13) vient en contact avec la seconde portion de contact (17b) d'une dent de stator (13) précédente en direction périphérique (L) du stator (11), et
**en ce que** la seconde portion de contact (17b) de la dent de stator respective (13) vient en contact avec la première portion de contact (17a) d'une dent de stator (13) suivante en direction périphérique (I) ;
pour établir une liaison par coopération de forme entre les premières et secondes portions de contact (17a, 17b) de deux dents de stator (13) successives en direction périphérique (I) du stator (11), la première portion de contact (17a) d'une dent de stator (13) présente un plongement (23) et la seconde portion de contact (17b) de la même dent de stator (13) présente un évidement (25) complémentaire au prolongement (23) ;
et
le prolongement (23) s'étend en direction radiale sur toute la dimension radiale de la première portion de contact (17a) et présente une extrémité libre dans la direction de la laquelle le prolongement (23) va en se rétrécissant en forme de coin.

2. Pompe à vide selon la revendication 1,
**caractérisée en ce que**
chaque dent de stator (13) porte au moins une bobine (29) qui a été enroulée autour de la dent de stator respective (13) avant l'assemblage des dents de stator (13).

3. Pompe à vide selon la revendication 1 ou 2,
**caractérisée en ce que**
des bobines (29) portées par les dents de stator (13) sont électriquement branchées entre elles.

4. Pompe à vide selon l'une des revendications précédentes,
**caractérisée en ce que**
sur ceux des côtés (15a, 15b) qui sont tournés vers une dent de stator précédente ou suivante, vue en direction périphérique (I) du stator (11), chaque dent de stator (13) présente une échancrure (21a, 21b), et une bobine (29) enroulée autour d'une dent de stator (13) est logée dans les échancrures (21a, 21b) de la dent de stator (13).

5. Pompe à vide selon la revendication 4,
**caractérisée en ce que**
la bobine (29) est enroulée autour de la dent de stator (13) de telle sorte que les échancrures (21a, 21b) sont remplies au moins approximativement complètement par la bobine (29).

6. Pompe à vide selon la revendication 4 ou 5,
**caractérisée en ce que**
le matériau électriquement conducteur contenu dans les enroulements (27) de la bobine (29), en particulier du cuivre, atteint un facteur de remplissage élevé dans les échancrures (21a, 21b), en particulier un facteur de remplissage de plus de 30 pourcents, de préférence de plus de 35 pourcents, de manière particulièrement préférée de plus de 40 pourcents, de manière encore plus préférée de plus de 45 pourcents, de manière encore plus préférée de plus de 50 pourcents et de manière tout particulièrement préférée de plus de 55 pourcents.

7. Pompe à vide selon la revendication 1,
**caractérisée en ce que**
dans le stator (11), les premières et les secondes portions de contact (17a, 17b) de deux dents de stator (13) successives en direction périphérique du stator (11) établissent une liaison par coopération de forme entre elles.

8. Pompe à vide selon l'une des revendications 1 ou 7,
**caractérisée en ce que**
pour chaque dent de stator (13), les deux portions de contact (27a, 17b) se situent radialement à l'extérieur par rapport à une direction radiale (II) du stator (11).

9. Pompe à vide selon l'une des revendications précédentes,
**caractérisée en ce que**
les dents de stator (13) sont fixées dans un boîtier (31), en particulier en établissant entre les dents de stator (13) et le boîtier (31) une jonction pressée transversale, en particulier une jonction pressée de dilatation ou une jonction pressée de contraction.

10. Procédé de réalisation d'un moteur électrique pour une pompe à vide (51), en particulier pour une pompe à vide selon l'une des revendications précédentes,
dans lequel
le moteur électrique comprend un rotor rotatif et un stator (11) de forme générale annulaire coopérant avec le rotor,
**caractérisé en ce que**
le stator (11) est composé de plusieurs dents de stator (13) successives en direction périphérique (I) du stator (11) et réalisées avec une forme générale de segment d'anneau ;
chaque dent de stator (13) comprend une portion porteuse (15) qui s'étend radialement et sur laquelle sont agencées une première et une seconde portion de contact (17a, 17b) en forme d'arc, situées radialement à l'extérieur, et une première et une seconde portion d'extrémité (19a, 19b) en forme d'arc, situées radialement à l'intérieur,
la première portion de contact et la première portion d'extrémité (19a) font saillie depuis la portion porteuse (15) en sens opposé à la direction périphérique, et la seconde portion de contact (17b) et la seconde portion d'extrémité (19b) font saillie depuis ladite portion porteuse en direction périphérique,
la première portion de contact (17a), la seconde portion de contact (17b), la première portion d'extrémité (19a) et la seconde portion d'extrémité (19b) présentant chacune une dimension radiale qui est constante en direction périphérique ;
dans le stator (11), la première portion de contact (17a) de la dent de stator respective (13) vient en contact avec la seconde portion de contact (17b) d'une dent de stator (13) précédente en direction périphérique (L) du stator, et
**en ce que** la seconde portion de contact (17b) de la dent de stator respective (13) vient en contact avec la première portion de contact (17a) d'une dent de stator (13) suivante en direction périphérique (I) ;
pour établir une liaison par coopération de formes entre les premières et les secondes portions de contact (17a, 17b) de deux dents de stator (13) successives en direction périphérique (I) du stator (11), la première portion de contact (17a) d'une dent de stator (13) présente un plongement (23) et la seconde portion de contact (17b) de la même dent de stator (13) présente un évidement (25) complémentaire au prolongement (23) ;
et
le prolongement (23) s'étend en direction radiale sur toute la dimension radiale de la première portion de contact (17a) et présente une extrémité libre dans la direction de la laquelle le prolongement (23) va en se rétrécissant en forme de coin.

11. Procédé selon la revendication 10,
**caractérisé en ce que**
avant d'assembler les dents de stator (13) pour donner le stator (11), au moins une bobine (29) est enroulée autour de chaque dent de stator (13), et/ou
**en ce que** des bobines (29) portées par les dents de stator (13) sont branchées ensemble, en particulier après l'assemblage des dents de stator (13) pour donner le stator (11).

12. Procédé selon la revendication 11,
**caractérisé en ce que**
la bobine respective (29) est enroulée autour de la dent de stator (13) respective, de telle sorte que des échancrures (21a, 21b) prévues dans la dent de stator (13) sont remplies au moins approximativement complètement par la bobine (29),
et/ou
**en ce que** le matériau électriquement conducteur contenu dans les enroulements (27) de la bobine (29), en particulier du cuivre, atteint un facteur de remplissage élevé dans les échancrures (21a, 21b), en particulier un facteur de remplissage de plus de 30 pourcents, de préférence de plus de 35 pourcents, de manière particulièrement préférée de plus de 40 pourcents, de manière encore plus préférée de plus de 45 pourcents, de manière encore plus préférée de plus de 50 pourcents et de manière tout particulièrement préférée de plus de 55 pourcents.

13. Procédé selon l'une des revendications 10 à 12,
**caractérisé en ce que**
les dents de stator (13) sont fixées dans un boîtier (31), en établissant entre les dents de stator (13) et le boîtier (31) une jonction pressée transversale, en particulier une jonction pressée de dilatation ou une liaison pressée de contraction.
